(19) Europäisches Patentamt

European Patent Office

Office européen des brevets

(11) **EP 1 505 045 A1**

(12) **EUROPÄISCHE PATENTANMELDUNG**

(43) Veröffentlichungstag:
**09.02.2005 Patentblatt 2005/06**

(51) Int Cl.⁷: **C04B 40/00**

(21) Anmeldenummer: **04017050.8**

(22) Anmeldetag: **20.07.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **01.08.2003 DE 10335363**

(71) Anmelder: **Dr. Paul Lohmann GmbH KG**
**31860 Emmerthal (DE)**

(72) Erfinder:
• **Berlekamp, Uwe, Dr.**
**31860 Emmerthal (DE)**

• **Günther, Uwe, Dr.**
**31787 Hameln (DE)**
• **Ottolien, Karsten**
**31860 Emmerthal (DE)**
• **Wehrmann, Björn**
**31789 Hameln (DE)**

(74) Vertreter: **Hannke, Christian**
**Ägidienplatz 7**
**93047 Regensburg (DE)**

(54) **Mittel zur Reduzierung von Chromatanteilen in einer Zementverbindung und dessen Herstellungsverfahren**

(57) Die Erfindung betrifft ein Mittel zur Reduzierung von Chromatanteilen in einer Zementverbindung sowie dessen Herstellungsverfahren, wobei das Mittel reduzierend wirkende Eisen(II)-Ionen und eine die Eisen(II)-Ionen enthaltende wässrige Lösung, die Zitronensäure und/oder Ascorbinsäure beinhaltet, umfasst. Des Weiteren wird ein Verfahren zur Herstellung eines derartigen Mittels beschrieben.

**Beschreibung**

Die Erfindung betrifft ein Mittel zur Reduzierung von Chromatanteilen in einer Zementverbindung sowie dessen Herstellungsverfahren gemäß den Oberbegriffen der Patentansprüche 1 und 9.

Bei Chromatanteilen in Zementverbindungen, die in der Regel im Baugewerbe verarbeitet werden, ergibt sich bekannterweise insbesondere bei Chrom(VI)- Verbindungen, wie beispielsweise dem Chrom(VI)-Oxid, das Problem, dass derartige Verbindungen als starke Oxidationsmittel wirken. Dies hat zur Folge, dass zum einen die in der Zementverbindung verarbeiteten Stahlverbindungen verstärkt oxidieren und zum anderen bei Personen, deren Haut mit der Zementverbindung oder einem Beton in Kontakt kommt, Chromat-Allergien, wie beispielsweise das bekannte Maurer-Ekzem, hervorgerufen werden, da das Oxidationsmittel auf Haut- und Schleimhautanteile ätzend wirkt.

Herkömmlicherweise werden zur Reduzierung von Chrom(VI)-Verbindungen in Zementverbindungen die reduzierenden Eigenschaften eines Kations eines Elements aus den Nebengruppen des Periodensystems ausgenutzt. In DE 198 42 300 A1 wird ein Mittel zum Reduzieren von Chrom(VI)-Ionen in einer hydraulisch abbindenden Masse beschrieben, bei dem Zinn(II)-Ionen als starkes Reduktionsmittel verwendet werden. Allerdings ist Zinn im Vergleich zu anderen Nebengruppenelementen ein relativ teurer Rohstoff in der Zement herstellenden, insbesondere Flüssigzement herstellenden Industrie, welche aufgrund des in dieser Branche vorherrschenden Preiskampfes an Niedrigpreisen interessiert ist.

Alternativ werden häufig Eisen(II)-Ionen mit deren reduzierender Wirkung für Chrom(VI)-Verbindungen in Zementverbindungen verwendet. Bekannt ist beispielsweise das Einsetzen von Eisen(II)-Sulfat in Zementverbindungen zur Reduktion der Chromatanteile. Ein derartiges Verfahren hat jedoch den Nachteil einer begrenzten Lagerstabilität aufgrund der Oxidation von Eisen (II) zu Eisen(III) durch Luftsauerstoff. Es gilt folgende Gleichgewichtsreaktion:

$$Fe^{2+} \rightarrow Fe^{3+} + e^{-}$$

Daraus resultiert eine unzureichende Lagerstabilität des Eisen-(II)-sulfates, die zu einer geringeren Verwendbarkeit als Chromatreduzierer führt. Zudem wird bei Einmischen des Fe(II)-Sulfats keine statistisch gleichmäßige Verteilung über die gesamte Zementverbindung erhalten, so dass eine exakte gleichmäßige Dosierung nicht möglich ist. Vielmehr existieren weiterhin Zementverbindungsanteile mit niedriger Fe(II)-Dosierung, die eine Oxidation von Stahlanteilen und eine Kontamination mit Cr(VI)-Ionen derjenigen Personen, die mit der Zementverbindung in Kontakt kommen, nicht ausschließen. Insbesondere bei der Chromatreduzierung von flüssigen oder pasteusen Zement enthaltenden Baustoffen wie z.B. Flüssigmörtel oder Transportbetone ist eine Dosierung mit festem Eisensulfat problematisch oder unmöglich.

Ergänzend sei erwähnt, dass eine Chromatreduzierung mit Fe-(II)-sulfat in Form einer wässrigen Lösung bisher zwar möglich, aber nicht praktikabel ist, da eine derartige Lösung nicht lagerstabil ist.

Demzufolge liegt der vorliegenden Erfindung die Aufgabe zugrunde, ein flüssiges Eisen-(II)-Ion enthaltendes Mittel zur Reduzierung von Chromatanteilen für insbesondere flüssige Zementverbindungen zur Verfügung zustellen, welches eine hohe Lagerstabilität insbesondere gegenüber einer oxidativen Eisen-(II) zu Eisen-(III)- Umwandlung aufweist. Des Weiteren ist es Aufgabe der Erfindung, ein Verfahren zur Herstellung einer derartigen Lösung zur Verfügung zu stellen.

Diese Aufgabe wird stoffseitig durch die Merkmale des Patentanspruches 1 und verfahrensseitig durch die Merkmale des Patentanspruches 9 gelöst.

Ein wesentlicher Punkt der Erfindung liegt darin, dass bei einem Mittel zur Reduzierung von Chromatanteilen einer Zementverbindung eine Eisen(II)- Ionen enthaltende, wässrige Lösung zusätzlich Zitronensäure und/oder Ascorbinsäure enthält. Hierbei können die Eisen(II)-Ionen auch zumindest teilweise als Eisen(II)-Sulfat vorliegen. Durch umfangreiche Untersuchungen wurde festgestellt, dass eine unerwünschte Umwandlung der Eisen(II)-Ionen in Eisen (III)-Ionen durch das zusätzliche Lösen von Zitronensäure und/oder Ascorbinsäure nahezu vollständig unterbunden ist. Somit ist eine dauerhafte und wirkungsvolle Reduzierung der Chromat- Ionen zu Chrom(III)- Ionen mit Werten, die deutlich unter einer 2 ppm- Grenze bezogen auf die Zementverbindung liegen, erreichbar.

Neben der vorteilhaften Verwendung eines kostengünstigen Rohstoffes wird erfindungsgemäß eine dauerhafte über die gesamte Zementverbindung hinweg beständige Reduktion des Chromats auf einen Wert < 2 ppm erhalten. Demzufolge sind eine weitere Kontaminierung der Personen mit Cr(VI)-Ionen und/oder eine Oxidation der Stahlanteile innerhalb einer Zementverbindung dauerhaft unterbunden.

Gemäß einer bevorzugten Ausführungsform weist die Lösung, in der Eisen(II) nicht zu Eisen(III) oxidiert, 40 - 99 Ma%, vorzugsweise 50 - 70 Ma%, noch bevorzugter 55 - 65 Ma% Wasser auf. Weiterhin beinhaltet die Lösung 15 - 55 Ma%, vorzugsweise 25 - 38 Ma% und noch bevorzugter 30 - 35 Ma% Eisen(II)-Sulfat 7H$_2$O, welches in dem Wasser, welches vorzugsweise vollentsalzt ist, gelöst wird. Zudem wird in einem derartigen ersten Zwischengemisch Zitronensäure, Eisenpulver und vorzugsweise Ascorbinsäure in unterschiedlicher Reihenfolge zugegeben, wobei 0,1 - 10 Ma%, vorzugsweise 0,3 - 4,0 Ma% und noch bevorzugter 3 - 3,5 Ma% Zitronensäure verwendet werden. Die Eisenpulveranteile betragen 0,1 - 10 Ma%, vorzugsweise 0,3 - 4,0 Ma% und noch bevorzugter 0,6 - 0,8 Ma%.

Bezogen auf die gesamte wässrige Lösung beträgt der Anteil an Eisen(II)-Ionen zwischen 1 Ma% und 30 Ma%, vorzugsweise 5 - 10 Ma%.

Bei einem Verfahren zur Herstellung eines Mittels zur Reduzierung von Chromatanteilen einer flüssigen Zementverbindung werden Eisen(II)-Ionen in Wasser gelöst, wobei in der dadurch erhaltenen Lösung anschließend Zitronensäure und/oder Ascorbinsäure gelöst wird. Auf diese Weise wird vorteilhaft die Oxidation der Eisen(II)-Ionen zu Eisen(III)-Ionen unterbunden, wodurch eine dauerhafte Eisen(II)-Verbindung erhalten wird. Das Herstellungsverfahren umfasst mehrere Schritte, wovon in einem ersten Schritt bezogen auf insgesamt 100 Anteile 40 - 99, vorzugsweise 55 - 65 Anteile Wasser gerührt werden, in einem zweiten Schritt 15 - 55, vorzugsweise 30 - 35 Anteile an Eisen(II)-Sulfat 7H$_2$O in dem Wasser zu einem ersten Zwischengemisch gelöst werden, in einem dritten Schritt 0,1 - 10, vorzugsweise 3 - 3,5 Anteile Zitronensäure in dem ersten Zwischengemisch zu einem zweiten Zwischengemisch gelöst werden und in einem vierten Schritt 0,1 - 10, vorzugsweise 0,6 - 0,8 Anteile Eisenpulver zu dem zweiten Zwischengemisch hinzugegeben werden, um die wässrige Lösung zu bilden.

In einem weiteren fünften Schritt wird die wässrige Lösung bei einer vorbestimmten Temperatur für eine vorbestimmte Zeitdauer erhitzt, um die Reaktionsvorgänge zu erleichtern und in einem sechsten Schritt wird die wässrige Lösung abfiltriert. Hierbei liegt die vorbestimmte Temperatur in einem Bereich von 30° - 100°C, vorzugsweise bei 55°C und die vorbestimmte Zeitdauer liegt in einem Bereich von 0,5 - 10 Stunden, vorzugsweise bei 2 Stunden. Mittels dieser Parameter ist eine die Eisen(II)-Oxidierung optimal vermeidende Lösung zum Zumischen in Zement, insbesondere Flüssigzement, wie bei Transportbeton oder Mörtel, erhältlich.

Weitere Vorteile der Ausführungsformen ergeben sich aus den Unteransprüchen.

Vorteile und Zweckmäßigkeiten sind der nachfolgenden Beschreibung in Verbindung mit den Ausführungsbeispielen zu entnehmen.

**Beispiel 1**

In einem 5l-Becherglas aus Glasmaterial mit einem als Balkenrührer ausgebildeten Rührwerk und einer darunter angeordneten Heizplatte einschließlich Temperaturfühler wird unter einer Abzugseinrichtung 1800 ml Wasser zum Rühren gebracht. Anschließend werden 1000 g Eisen(II)- Sulfat * 7H$_2$O in dem Wasser gelöst. Ein derartiges erstes Zwischengemisch nimmt eine grüne Farbe an.

In dem ersten Zwischengemisch werden 100 g Zitronensäure und 10 g Ascorbinsäure gelöst und bilden ein zweites Zwischengemisch. In dem zweiten Zwischengemisch werden anschließend 20 g Eisenpulver hinzugefügt, um die Eisenkonzentration in der dadurch erhaltenen wässrigen Lösung zu erhöhen. Die wässrige Lösung wird ca. 2 Stunden bei einer Temperatur von 55°C reagieren gelassen und anschließend über einen Trichter mit Faltenfilter abfiltriert. Die wässrige Lösung hat eine grün- braune Färbung angenommen.

Nachfolgend sind in einer Tabelle 1 die Stabilitätsdaten der resultierenden Lösung aufgeführt. Es sind die Eisengehalte in Ma% bezogen auf die gesamte wässrige Lösung in Abhängigkeit von dem zeitlichen Verlauf dargestellt.

Tabelle 1

| Eisen- Gehalte: | | | |
|---|---|---|---|
| Tage | Eisen(II) | Eisen(III) | Farbe |
| 5 | 7,5% | 0,02% | klare braun/ grüne Lösung |
| 13 | 7,6% | 0,02% | klare braun/ grüne Lösung |
| 20 | 7,3% | 0,0% | klare braun/ grüne Lösung |
| 25 | 7,5% | 0,00% | klare braun/ grüne Lösung |
| 32 | 7,8% | 0,07% | klare braun/ grüne Lösung |
| 41 | 7,4% | 0,0% | klare braun/ grüne Lösung |
| 53 | 7,5% | 0,05% | klare braun/ grüne Lösung |

Wie aus der Tabelle 1 ersichtlich ist, ist über den gesamten Zeitraum von 53 Tagen kaum eine Verringerung des Eisen(II)- Ionengehaltes und eine nur geringe Zunahme des Eisen(III)-Ionengehaltes von 0,02 auf 0,07 Ma% beobachtet worden.

Um den Chromat- Anteil bestimmen zu können, ist folgendes Analyseverfahren zur Bestimmung des wasserlöslichen Chromates in Zementen verwendet worden. Hierbei sind die Chrom(VI)-Anteile anschließend in Chromatanteile mittels eines vorbestimmten Faktors umgerechnet worden.

In einem Weithalskolben werden 0,5 ml, 1,0 ml, 1,5 ml, 2,0 ml, 3,0 ml und 4,0 ml einer Chrom(VI)-Standardlösung pipettiert. Dies entspricht 2,5 μg, 5,0 μg, 7,5 μg, 10,0 μg und 15,0 μg sowie 20 μg Chrom(VI). Die Chrom(VI) -Standardlösung besteht aus einer 5 ml Chrom(VI)-Stammlösung, die in einem Messkolben mit einem Nennvolumen von 1000 ml verdünnt wird. Die Lösung enthält hierbei 5 μg an Chrom(VI) pro ml. Die Chrom(VI)-Stammlösung wird wie folgt angefertigt:

2829 mg Kaliumchromat ($K_2Cr_2O_7$) werden in einem Messkolben mit einem Nennvolumen von 1000 ml in Wasser gelöst und bis zur Marke aufgefüllt. Diese Lösung enthält 1 mg Chrom(VI) pro ml.

Neben dem Weithalskolben wird ein weiterer Kolben für die Blindprobe verwendet.

Die Chrom(VI)-Standardlösungen werden mit 40 ml Wasser verdünnt und anschließend werden 5 ml einer Bromlösung zugesetzt. Die Bromlösung wird durch so langes Zugeben von Brom in Wasser während eines Schüttelvorganges erhalten, bis ein bleibender Bodensatz bestehen bleibt. Durch das Hinzugeben der Bromlösung zu der Standardlösung entsteht eine deutliche Gelbfärbung. Danach werden 2 ml 15 %- iger Natronlauge zugesetzt und gut miteinander vermischt. Die Proben werden nun ca. 1 min. gekocht und über eine Zeitspanne von ca. 5 min. abgekühlt.

Anschließend werden 2 ml einer Salzsäurelösung, die konzentrierte Salzsäure mit Wasser in einem Mischungsverhältnis 1:1 enthält, zugesetzt, wobei sich eine deutliche Gelbfärbung einstellt. Sofern dies nicht der Fall ist, werden weitere 2 ml Salzsäurelösung zugesetzt. Das Brom wird durch Erhitzen aus der Lösung entfernt, wobei der Erhitzungsvorgang nach der Entfärbung sofort eingestellt wird. Der pH-Wert der Lösung soll nach dem Erhitzen 1 bis 2 betragen. Ist dies nicht der Fall, so ist der pH-Wert mit zusätzlicher Salzsäure einzustellen.

Nach dem Abkühlen werden die Proben in Messkolben mit einem Nennvolumen von 100 ml überführt, mit 2 ml 1,5- Diphenylcarbazidlösung versetzt und mit Wasser bis zur Marke aufgefüllt. Nach 15 min. wird die Extinktion bei einer Wellenlänge von 540 nm gegen die Blindprobe gemessen.

Für die eigentliche Analyse einer Probe werden 10,0 g Zement einer bestimmten Zementart Nr. 1 - 7 mit einer Toleranz von +/- 0,01 mg abgewogen, in einem 100 ml-Becherglas mit 40 ml Wasser versetzt und 15 min. intensiv gerührt. Unmittelbar nach Ablauf der 15 min. wird die Suspension ohne Nachwaschen durch eine trockene 125 ml- Glasfritte der Porosität 3 in eine trockene Saugflasche abgesaugt. Von dem Filtrat werden 20 ml abpipettiert und gemäß dem oben dargestellten Bestimmungsverfahren aufgearbeitet.

Anhand des oben dargestellten Bestimmungsverfahrens ist das Aufstellen einer Bezugskurve für Chrom(VI) -Anteilsbestimmungen in Zement möglich, in welcher für die jeweiligen Extinktions- Messungen die entsprechenden Chrom(VI)- Werte abgelesen werden können.

Eine Umrechnung in ppm erfolgt durch die Formel

$$K = \frac{C * V_1}{M * V_2}$$

Hierbei ist K die Konzentration an Chrom(VI) in ppm, C die Konzentration an Chrom (VI) in μg innerhalb der Probe, $V_1$ das Eluationsvolumen, $V_2$ das entnommene Volumen und M die Masse des eluierten Rohstoffes in g.

Der nachfolgenden Tabelle sind die Messergebnisse, welche Chromat- Anteile in den Zementproben Nr. 1 - 7 wiedergeben, für die Anwendung einer 0,3 %- igen und einer 0,15 %- igen Lösung dargestellt. Ebenso ist der Chromat- Gehalt vor der Anwendung des erfindungsgemäßen Mittels dargestellt.

Tabelle 2

| Chromatreduzierter Zement mit Eisen(II)-Sulfat-Lösung gemäß Beispiel 1: | | | |
|---|---|---|---|
| Zementart | Chromat- Gehalt vor Reduzierung | Chromat- Gehalt reduziert mit 0,3 %-Lösung | Chromat- Gehalt reduziert mit 0,15 %-Lösung |
| 1 | 7,85 ppm | < 0,20 ppm | 1,71 ppm |
| 2 | 8,41 ppm | 0,22 ppm | 2,16 ppm |
| 3 | 3,12 ppm | 0,36 ppm | 0,78 ppm |
| 4 | < 0,2 ppm | < 0,2 ppm | < 0,2 ppm |
| 5 | 11,18 ppm | < 0,20 ppm | 2,49 ppm |
| 6 | 5,51 ppm | < 0,20 ppm | 0,22 ppm |
| 7 | 3,08 ppm | < 0,20 ppm | 1,12 ppm |

Wie der Tabelle 2 zu entnehmen ist, findet eine deutliche Reduzierung des Chromat- Gehalts bei den verschiedenen Zementarten 1 - 7 unter 2 ppm statt. Bei der Verwendung einer 0,3 %- igen Lösung beträgt der Chromat- Anteil maximal 0,36 ppm und bei der Verwendung einer 0,15 %- igen Lösung beträgt der Chromat- Anteil maximal 2,49 ppm. Demzufolge muß von Lösung 1 0,2 % zur Reduzierung von 10 ppm Chromat in Zement zugesetzt werden.

**Beispiel 2**

Eine Eisen(II)-Sulfat-Lösung wird in ähnlicher Weise, wie unter Beispiel 1 bereits dargestellt, hergestellt. Allerdings wird in diesem Fall 100 g Zitronensäure und 10 g Ascorbinsäure erst nach dem Filtrationsvorgang in dem Zwischengemisch gelöst und erhält hierdurch eine grüne Färbung. Der nachfolgenden Tabelle 3 ist zu entnehmen, dass sich der Eisen(II)-Gehalt über die gesamte Zeitspanne von 53 Tagen kaum verringert und der Eisen(III)-Gehalt kaum zunimmt.

Tabelle 3

| Eisen- Gehalte: | | | |
|---|---|---|---|
| Tage | Eisen(II) | Eisen(III) | Farbe |
| 5 | 7,32% | 0,00% | klare grüne Lösung |
| 13 | 7,3% | 0,02% | klare grüne Lösung |
| 20 | 7,3% | 0,0% | klare grüne Lösung |
| 25 | 7,3% | 0,00% | klare grüne Lösung |
| 32 | 7,2% | 0,04% | klare grüne/ braune Lösung |
| 41 | 7,2% | 0,03% | klare grüne/ braune Lösung |
| 53 | 7,30% | 0,02% | klare grüne/ braune Lösung |

Der nachfolgenden Tabelle 4 ist wiederum zu entnehmen, dass abhängig von der Zementart bei Verwendung einer 0,3 %- igen Lösung ein maximaler Chromat- Anteil von 0,51 ppm und bei der Verwendung einer 0,15 %- igen Lösung ein maximaler Chromat- Anteil von 2,85 ppm erhalten wird.

Tabelle 4

| Chromatreduzierter Zement mit Eisen(II)- Sulfat- Lösung gemäß Beispiel 2: | | | |
|---|---|---|---|
| Zementart | Chromat- Gehalt vor reduzierung | Chromat- Gehalt reduziert mit 0,3 %-Lösung | Chromat- Gehalt reduziert mit 0,15 %-Lösung |
| 1 | 7,85 ppm | <0,20 ppm | <0,20 ppm |
| 2 | 8,41 ppm | <0,20 ppm | 1,49 ppm |
| 3 | 3,12 ppm | 0,51 ppm | 0,80 ppm |
| 4 | < 0,2 ppm | < 0,2 ppm | < 0,2 ppm |
| 5 | 11,18 ppm | 0,22 ppm | 2,85 ppm |
| 6 | 5,51 ppm | 0,22 ppm | 2,67 ppm |
| 7 | 3,08 ppm | 0,3 ppm | 0,89 ppm |

**Beispiel 3**

Eine Lösung gemäß eines dritten Ausführungsbeispieles ist in ähnlicher Weise hergestellt worden, wie bereits unter Beispiel 1 beschrieben wurde. Allerdings wurden 100 g Zitronensäure erst nach dem Filtrationsschritt dem Zwischengemisch hinzugefügt und darin gelöst, um eine wässrige Lösung mit grüner Färbung zu erhalten. Ascorbinsäure ist nicht hinzugefügt worden.

Der nachfolgenden Tabelle 5 ist eine sehr geringe Veränderung der Eisen(II)- und Eisen(III)-Werte über einen Zeitraum von 23 Tagen zu entnehmen.

Tabelle 5

| Eisen- Gehalte: | | | |
|---|---|---|---|
| Tage | Eisen(II) | Eisen(III) | Farbe |
| 0 | 7,57% | 0,04% | klare grüne Lösung |
| 16 | 7,56% | 0,07% | klare grüne Lösung |
| 23 | 7,5% | 0,09% | klare grün/ braune Lösung |

Auch bei Verwendung der Lösung gemäß dem dritten Ausführungsbeispiel lagen gemessene Chromat- Werte von maximal 0,87 ppm bei Verwendung einer 0,3 %- igen Lösung und ca. 3,05% bei der Verwendung einer 0,15 %-igen Lösung vor.

Tabelle 6

| Chromatreduzierter Zement mit Eisen(II)- Sulfat- Lösung gemäß Beispiel 3: | | | |
|---|---|---|---|
| Zementart | Chromat- Gehalt vor reduzierung | Chromat- Gehalt reduziert mit 0,3 %-Lösung | Chromat- Gehalt reduziert mit 0,15 %-Lösung |
| 1 | 7,85 ppm | 0,87 ppm | 1,07 ppm |
| 2 | 8,41 ppm | 0,23 ppm | 3,05 ppm |
| 3 | 3,12 ppm | <0,20 ppm | <0,20 ppm |
| 4 | < 0,2 ppm | < 0,2 ppm | < 0,2 ppm |
| 5 | 11,18 ppm | <0,20 ppm | 1,84 ppm |
| 6 | 5,51 ppm | 0,24 ppm | 1,74 ppm |
| 7 | 3,08 ppm | 0,78 ppm | 1,29 ppm |

**Beispiel 4**

Das Herstellungsverfahren der Lösung gemäß dem vierten Ausführungsbeispiel ist vergleichbar mit dem unter Beispiel 1 beschriebenen Verfahren mit der Ausnahme, dass 100 g Zitronensäure und 10 g Ascorbinsäure erst nach dem Filtrationsschritt dem Zwischengemisch hinzugefügt wurden. Anschließend wurde eine Erhöhung des pH- Wertes der grün gefärbten Lösung auf 2,1 mittels Hinzumischen von 21 g Natriumcarbonat erreicht. Ein höherer pH-Wert wirkt sich vorteilhaft auf die Korrosionsbeständigkeit der Zementverbindung aus.

Der nachfolgenden Tabelle 6 ist zu entnehmen, dass nach einer Zeitdauer von 20 Tagen eine nur geringfügige Veränderung der Eisen(II)- und Eisen(III)- Werte vorhanden ist.

Tabelle 7

| Eisen- Gehalte: | | | |
|---|---|---|---|
| Tage | Eisen(II) | Eisen(III) | Farbe |
| 0 | 7,2% | 0,0% | klare grüne Lösung |
| 8 | 7,0% | 0,04% | klare braune Lösung |
| 20 | 6,6% | 0,0% | klare braune Lösung |

Tabelle 8

| Chromatreduzierter Zement mit Eisen(II)- Sulfat- Lösung gemäß Beispiel 4: | | | |
|---|---|---|---|
| Zementart | Chromat- Gehalt vor Reduzierung | Chromat- Gehalt reduziert mit 0,3 %-Lösung | Chromat- Gehalt reduziert mit 0,15 %-Lösung |
| 1 | 7,85 ppm | <0,20 ppm | 0,67 ppm |
| 2 | 8,41 ppm | 0,42 ppm | 2,96 ppm |
| 3 | 3,12 ppm | <0,20 ppm | 0,73 ppm |
| 4 | < 0,2 ppm | < 0,20 ppm | 0,62 ppm |
| 5 | 11,18 ppm | 0,51 ppm | 1,85 ppm |
| 6 | 5,51 ppm | 0,27 ppm | 1,53 ppm |
| 7 | 3,08 ppm | 0,58 ppm | 1,31 ppm |

**Beispiel 5**

Das Herstellungsverfahren der Lösung gemäß dem fünften Ausführungsbeispiel ist vergleichbar mit dem unter Beispiel 1 beschriebenen Verfahren. Anschließend wurde eine Erhöhung des pH- Wertes der grün gefärbten Lösung auf 3,1 mittels Reaktion mit 33 g Eisenpulver erreicht. Ein höherer pH Wert wirkt sich vorteilhaft auf die Korrosionsbeständigkeit der Zementverbindung aus.

Der nachfolgenden Tabelle 9 ist zu entnehmen, dass bei einer Zeitdauer von 7 Tagen eine nur geringfügige Veränderung der Eisen(II)- und Eisen(III)- Werte vorhanden ist.

Tabelle 9

| Eisen- Gehalte: | | | |
|---|---|---|---|
| Tage | Eisen(II) | Eisen(III) | Farbe |
| 0 | 9,3% | 0,06% | klare grüne Lösung |
| 7 | 8,85% | 0,04% | klare braune Lösung |

Tabelle 10

| Chromatreduzierter Zement mit Eisen(II)- Sulfat- Lösung gemäß Beispiel 5: | | | |
|---|---|---|---|
| Zementart | Chromat- Gehalt vor Reduzierung | Chromat- Gehalt reduziert mit 0,3 %-Lösung | Chromat- Gehalt reduziert mit 0,15 %-Lösung |
| 1 | 7,85 ppm | <0,20 ppm | 0,51 ppm |
| 2 | 8,41 ppm | 0,40 ppm | 0,40 ppm |
| 3 | 3,12 ppm | <0,20 ppm | <0,20 ppm |
| 4 | < 0,2 ppm | < 0,2 ppm | < 0,2 ppm |
| 5 | 11,18 ppm | < 0,2 ppm | 0,29 ppm |
| 6 | 5,51 ppm | < 0,2 ppm | < 0,2 ppm |
| 7 | 3,08 ppm | < 0,2 ppm | 0,49 ppm |

An dieser Stelle sei darauf hingewiesen, dass alle oben beschriebenen Stoffzusammensetzungen für sich allein gesehen und in jeder Kombination als erfindungswesentlich beansprucht werden. Abänderungen hiervon sind dem Fachmann geläufig. Beispielsweise kann das erfindungsgemäße Mittel zur Reduzierung von Chrom(VI)- Anteilen bzw. Chromatanteilen ebenso für andere Massen, wie beispielsweise Zuschlagstoffe, Additive, Wasser und Binder, welche mit Cr(VI)-Ionen bzw. Chromationen kontaminiert sind, verwendet werden.

**Patentansprüche**

1. Mittel zur Reduzierung von Chromatanteilen in einer Zementverbindung, wobei das Mittel reduzierend wirkende Eisen(II)- Ionen enthält,
   **gekennzeichnet durch**
   eine die Eisen(II)- Ionen enthaltende wässrige Lösung, die Zitronensäure und/oder Ascorbinsäure beinhaltet.

2. Mittel nach Anspruch 1,
   **dadurch gekennzeichnet, dass**
   die Eisen(II)-Ionen in der wässrigen Lösung zumindest teilweise als Eisen(II)-Sulfat vorliegen.

3. Mittel nach Anspruch 2,
   **dadurch gekennzeichnet, dass**
   die wässrige Lösung sich aus 40 - 99 Ma% Wasser, 15 - 55 Ma% Eisen(II)-Sulfat * 7 $H_2O$, 0,1 - 10 Ma% Zitronensäure (und 0,1 - 10 Ma% Eisenpulver) zusammensetzt.

4. Mittel nach Anspruch 2,
   **dadurch gekennzeichnet, dass**
   die wässrige Lösung sich aus 50 - 70 Ma% Wasser, 25 - 38 Ma% Eisen(II)-Sulfat * 7 $H_2O$, 0,3 - 4 Ma% Zitronensäure (und 0,1 -. 0,4 Ma% Eisenpulver) zusammensetzt.

5. Mittel nach Anspruch 2,
   **dadurch gekennzeichnet, dass**
   die wässrige Lösung sich aus 55 - 65 Ma% Wasser, 30 - 35 Ma% Eisen(II)-Sulfat * 7 $H_2O$, 3 - 3,5 Ma% Zitronensäure (und 0,6 - 1,5 Ma% Eisenpulver) zusammensetzt.

**6.** Mittel nach einem der Ansprüche 1 - 5,
**dadurch gekennzeichnet, dass**
die wässrige Lösung 0,1 - 10 Ma% Ascorbinsäure, vorzugsweise 0,3 - 0,8 Ma% Ascorbinsäure enthält.

**7.** Mittel nach einem der vorangegangenen Ansprüche,
**dadurch gekennzeichnet,dass**
die wässrige Lösung einen Anteil an Eisen(II)-Ionen zwischen 1 Ma% und 30 Ma%, vorzugsweise zwischen 5 Ma% und 10 Ma% aufweist.

**8.** Mittel nach einem der vorangegangenen Ansprüche,
**dadurch gekennzeichnet, dass**
das Mittel flüssig ist und einen pH-Wert im Bereich von 1,8 - 4 aufweist..

**9.** Verfahren zur Herstellung eines Mittels zur Reduzierung von Chromatanteilen in einer Zementverbindung, wobei das Mittel reduzierend wirkende Eisen(II)-Ionen enthält,
**dadurch gekennzeichnet,dass**
Eisen(II)-Ionen in Wasser als wässrige Lösung gelöst werden und anschließend Zitronensäure und/oder Ascorbinsäure in der Eisen(II)-Ionen enthaltenden Lösung gelöst werden.

**10.** Verfahren nach Anspruch 9,
**dadurch gekennzeichnet,dass**
die Eisen(II)-Ionen zumindest teilweise als Eisen(II)- Sulfat in Wasser gelöst werden.

**11.** Verfahren nach Anspruch 10,
**dadurch gekennzeichnet, dass**
bezogen auf insgesamt 100 Anteile

- in einem ersten Schritt 40 - 99, vorzugsweise 55 - 65 Anteile Wasser gerührt werden,
- in einem zweiten Schritt 15 - 55, vorzugsweise 30 - 35 Anteile an Eisen(II)-Sulfat 7 $H_2O$ in dem Wasser zu einem ersten Zwischengemisch gelöst werden,
- in einem dritten Schritt 0,1 - 10, vorzugsweise 3 - 3,5 Anteile Zitronensäure in dem ersten Zwischengemisch zu einem zweiten Zwischengemisch gelöst werden,
- in einem vierten Schritt 0,1 - 10, vorzugsweise 0,6 - 1,5 Anteile Eisenpulver zu dem zweiten Zwischengemisch hinzugegeben werden und die wässrige Lösung bilden,
- in einem fünften Schritt die wässrige Lösung bei einer vorbestimmten Temperatur für eine vorbestimmte Zeitdauer erhitzt wird, und
- in einem sechsten Schritt die wässrige Lösung filtriert wird.

**12.** Verfahren nach Anspruch 10,
**dadurch gekennzeichnet, dass**
bezogen auf insgesamt 100 Anteile

- in einem ersten Schritt 40 - 99, vorzugsweise 55 - 65 Anteile Wasser gerührt werden,
- in einem zweiten Schritt 15 - 55, vorzugsweise 30 - 35 Anteile an Eisen(II)-Sulfat 7 $H_2O$ in dem Wasser zu einem Zwischengemisch gelöst werden,
- in einem dritten Schritt 0,1 - 10, vorzugsweise 0,6 - 1,5 Anteile Eisenpulver zu dem zweiten Zwischengemisch hinzugegeben werden,
- in einem vierten Schritt das Zwischengemisch bei einer vorbestimmten Temperatur für eine vorbestimmte Zeitdauer erhitzt wird,
- in einem fünften Schritt das Zwischengemisch filtriert wird, und
- in einem sechsten Schritt 0,1 - 10, vorzugsweise 3 - 3,5 Anteile Zitronensäure in dem Zwischengemisch zu einer wässrigen Lösung gelöst werden.

**13.** Verfahren nach Anspruch 11 oder 12,
**dadurch gekennzeichnet,dass**
die vorbestimmte Temperatur in einem Bereich von 30 -100°C, vorzugsweise bei 55°C liegt.

**14.** Verfahren nach einem der Ansprüche 11 - 13,

**dadurch gekennzeichnet, dass**
die vorbestimmte Zeitdauer in einem Bereich von 0,5 - 10 h, vorzugsweise bei 2 h liegt.

15. Verfahren nach einem der Ansprüche 11 - 14,
**dadurch gekennzeichnet, dass**
zusätzlich 0,1 - 10 Anteile, vorzugsweise 0,3 - 0,4 Anteile Ascorbinsäure zeitgleich mit der Zitronensäure in den Zwischengemischen gelöst wird.

**Europäisches Patentamt**

# EUROPÄISCHER RECHERCHENBERICHT

Nummer der Anmeldung

EP 04 01 7050

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 00/06517 A (SUTER WILLI ; AKSTINAT MANFRED (CH); HOLDERBANK FINANC GLARUS (CH)) 10. Februar 2000 (2000-02-10) * das ganze Dokument * ----- | 1-15 | C04B40/00 |
| X | EP 0 600 128 A (EN TECH RESEARCH INST INC) 8. Juni 1994 (1994-06-08) * Seite 2, Zeile 45 - Seite 3, Zeile 22 * * Seite 4, Zeilen 11-13 * ----- | 1 | |
| A | WO 91/15435 A (AALBORG PORTLAND AS) 17. Oktober 1991 (1991-10-17) * das ganze Dokument * ----- | | |

| RECHERCHIERTE SACHGEBIETE (Int.Cl.7) |
|---|
| C04B |

Der vorliegende Recherchenbericht wurde für alle Patentansprüche erstellt

| Recherchenort | Abschlußdatum der Recherche | Prüfer |
|---|---|---|
| München | 15. Oktober 2004 | Gattinger, I |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

## ANHANG ZUM EUROPÄISCHEN RECHERCHENBERICHT
## ÜBER DIE EUROPÄISCHE PATENTANMELDUNG NR.

EP 04 01 7050

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2004

| Im Recherchenbericht angeführtes Patentdokument | | Datum der Veröffentlichung | Mitglied(er) der Patentfamilie | | Datum der Veröffentlichung |
|---|---|---|---|---|---|
| WO 0006517 | A | 10-02-2000 | WO | 0006517 A1 | 10-02-2000 |
| | | | AT | 256087 T | 15-12-2003 |
| | | | AU | 8352898 A | 21-02-2000 |
| | | | DE | 59810424 D1 | 22-01-2004 |
| | | | EP | 1100758 A1 | 23-05-2001 |
| EP 0600128 | A | 08-06-1994 | EP | 0600128 A1 | 08-06-1994 |
| WO 9115435 | A | 17-10-1991 | AT | 139987 T | 15-07-1996 |
| | | | AU | 647118 B2 | 17-03-1994 |
| | | | AU | 7671091 A | 30-10-1991 |
| | | | CA | 2080379 A1 | 12-10-1991 |
| | | | DE | 69120672 D1 | 08-08-1996 |
| | | | DE | 69120672 T2 | 06-03-1997 |
| | | | WO | 9115435 A1 | 17-10-1991 |
| | | | DK | 524999 T3 | 28-10-1996 |
| | | | EP | 0524999 A1 | 03-02-1993 |
| | | | FI | 924585 A | 09-10-1992 |
| | | | IE | 911222 A1 | 23-10-1991 |
| | | | NO | 923937 A | 09-10-1992 |
| | | | US | 5362321 A | 08-11-1994 |

EPO FORM P0461

Für nähere Einzelheiten zu diesem Anhang : siehe Amtsblatt des Europäischen Patentamts, Nr.12/82